**Europäisches Patentamt**

**European Patent Office**

**Office européen des brevets**

(19)

(11) Veröffentlichungsnummer: **0 235 321**
**B1**

(12) # EUROPÄISCHE PATENTSCHRIFT

(45) Veröffentlichungstag der Patentschrift:
02.05.90

(51) Int. Cl.⁴: **B23D 1/00, B23Q 1/26**

(21) Anmeldenummer: 86102595.5

(22) Anmeldetag: 28.02.86

(54) Verfahren zum Bearbeiten von Metallband und hierzu dienendes Führungslineal.

(43) Veröffentlichungstag der Anmeldung:
09.09.87 Patentblatt 87/37

(45) Bekanntmachung des Hinweises auf die Patenterteilung:
02.05.90 Patentblatt 90/18

(84) Benannte Vertragsstaaten:
AT BE CH DE FR GB IT LI NL SE

(56) Entgegenhaltungen:
DE-C- 577 495
FR-A- 2 505 706
GB-A- 876 171
GB-A- 898 923
GB-A- 1 076 404
US-A- 3 496 810

(73) Patentinhaber: **Julius Maschinenbau GmbH,
Zeisigweg 16, D-5603 Wülfrath(DE)**

(72) Erfinder: **Julius, Rolf, Zeisigweg 16, D-5603 Wülfrath(DE)**

(74) Vertreter: **Schulze Horn, Stefan, Dipl.-Ing. M.Sc.,
Goldstrasse 36, D-4400 Münster(DE)**

## Beschreibung

Die Erfindung betrifft, ausgehend vom Stand der Technik gemäß DE-C 577 495 ein Verfahren der im Oberbegriff von Anspruch 1 genannten Art und gemäß Patentanspruch 3 ein zum Durchführen dieses Verfahrens dienendes Führungslineal.

Maschinen der genannten Art sind seit langem bekannt und dienen zum Beschneiden sowie Fasen von Bandkanten. Nachteilig ist bei derartigen Maschinen, daß bei der Spanabhebung leicht Späne zwischen die Führungsseiten der Führungslineale und die Oberflächen des Metallbandes geraten können. Hierdurch wird der Banddurchlauf behindert, und es besteht die Gefahr der Beschädigung der Oberfläche. Außerdem ist es nachteilig, daß zum Bewegen des Metallbandes aufgrund der Reibung zwischen den Führungsseiten und den Bandoberflächen oft große Kräfte erforderlich sind. Insbesondere aufgrund dieser Eigenschaften ist die Banddurchlaufgeschwindigkeit relativ stark begrenzt. Es wurde zwar versucht, diese Nachteile durch die Verwendung von reibungsvermindernden Teflon-Zwischenlagen zu beheben, doch erwiesen sich derartige Zwischenlagen als zu verschleißanfällig.

Der vorliegenden Erfindung liegt daher die Aufgabe zu grunde, ein Verfahren der im Oberbegriff genannten Art und ein zum Durchführen desselben dienendes Führungslineal mit einfachen Maßnahmen so zu gestalten, daß bei geringstmöglicher Reibung sowie Antriebskraft keinerlei Störungen durch in den Berührungsbereich eindringende Späne auftreten.

Zur Lösung der gestellten Aufgabe wird bei einem Verfahren der im Oberbegriff von Patentanspruch 1 genannten Art erfindungsgemäß vorgeschlagen, daß an in Bewegungsrichtung versetzten einzelnen Stellen zwischen das Metallband und die Führungslineale aus deren Mittenbereich heraus ein ins Freie austretendes Strömungsmedium unter Druck eingepreßt wird. Dieses Strömungsmedium, das gemäß dem Anspruch 2 Schneidöl-Emulsion sein kann, sorgt dafür, daß das Metallband weitgehend reibungsfrei geführt ist und die auftretenden Materialspäne mit dem aus dem Berührungsbereich seitlich austretenden Strömungsmedium direkt abgeführt werden.

Dieser grundsätzliche Einsatz des Prinzips einer Gleitspülung bei einer Bandkantenbearbeitungsmaschine führt dazu, daß äußerst geringe Antriebskräfte auftreten, keinerlei Beschädigungsgefahr für Lineale und Band vorliegt und sehr große Banddurchlaufgeschwindigkeiten gewählt werden können. Es hat sich ferner gezeigt, daß gerade die Zuführung von Strömungsmedium an in Längsrichtung gegenseitig beabstandeten Stellen von besonderem Vorteil für den gesamten Betriebsablauf ist.

Zur Lösung der gestellten Aufgabe zeichnet sich ferner ein zum Durchführen des erfindungsgemäßen Verfahrens geeignetes Führungslineal gemäß Patentanspuch 3 erfindungsgemäß dadurch aus, daß in der dem Metallband gegenüberliegenden Führungsseite eines jeden Führungslineals in Längsrichtung desselben und unter gegenseitigem Längsabstand etwa mittig verlaufende Längsnuten ausgebildet sind, die mit Einlässen für das ins Freie austretende Strömungsmedium verbunden sind. Diese einzelnen Längsnuten eignen sich in besonders guter Weise zum Zuführen des Strömungsmediums über einzelne Längenabschnitte des Führungslineals, während in den Bereichen zwischen angrenzenden Längsnuten bewußt keine Nutaustrittstelle für Strömungsmedium vorgesehen ist. Da in diese Bereiche Strömungsmedium aus den angrenzenden Längsnuten eintreten und von dort abströmen kann, ist eine ausreichende Reibungsverminderung gewährleistet. Die nutfreien Bereiche der Führungsseiten der Lineale sorgen durch die vollflächige Bandauflage für eine bessere Führung des Metallbandes.

In weiterer Ausgestaltung sollte die Nutbreite relative groß sein und gemäß Anspruch 4 zumindest einem Drittel der angrenzenden Breite der Führungsseite entsprechen. Hierdurch ergibt sich eine relativ großflächige Druckbeaufschlagung des Metallbandes mit dem Ergebnis eines äußerst wirksamen Druckpolsters. Gemäß Anspruch 5 sollte der Längsabstand aneinander angrenzender Längsnuten in der Größenordnung der wesentlichen Nutbreite liegen. Dieser Abstand genügt, um die erwünschte gute Bandführung zu erzielen und sollte im Hinblick auf eine wirksame Gleitspülung auch nicht wesentlich größer gewählt werden.

Bei einer ersten bevorzugten Ausführungsform des Führungslineals gemäß den Ansprüchen 6 bis 8 sind die Breiten des Führungslineals und der Längsnuten über die Länge im wesentlichen gleichbleibend. Diese Ausführungsform ist besonders einfach und hat sich als völlig ausreichend erwiesen. Wenn zusätzlich zu den Längsnuten gemäß den Ansprüchen 9 und 10 ferner in den Führungsseiten der Lineale im Bereich der Einlässe Quernuten geringerer Tiefe eingebettet sind, können hierdurch weitere Vorteile hinsichtlich des Betriebsergebnisses erzielt werden. Es lassen sich auf diese Weise äußerst geringe Reibungskräfte und ein ausgesprochen wirksames Fernhalten der Spähne aus dem Spaltbereich zwischen dem Metallband sowie den Führungslinealen erreichen.

Bei einer weiteren bevorzugten Ausführungsform des Führungslineals gemäß den Ansprüchen 11 bis 16 sind die Breiten der Längsnuten und der Führungsseiten der Führungslineale über die Länge variabel. Im einzelnen bestehen die Längsnuten aus einem Abschnitt mit einer schmaleren Nutenbreite und einer endseitigen kreisförmigen Erweiterung. Im Bereich der schmalen Nutenbreite ist auch die Führungsseite schmaler ausgebildet, so daß sich über die Länge des Führungslineals wiederholt Aussparungen zur Anordnung von Werkzeugen ergeben, wobei sich die kreisförmigen Erweiterungen der Nuten in den breiteren Abschnitten der Führungsseite befinden. Ein derartiges Führungslineal hat besonders gute dynamische Eigenschaften hinsichtlich einer guten Führung, einer Verringerung der Reibung bzw. der Antriebskräfte und einer wirksamen Ableitung der Späne insbesondere bei sehr dünnen Bändern.

In weiterer Ausgestaltung können die Einlässe der einzelnen Längsnuten in Bandlaufrichtung gesehen jeweils im Anfangsbereich liegen, wobei diese Einlässe vorteilhaft mit einem im Inneren des Lineals in dessen Längsrichtung verlaufenden Kanal verbunden sind. Zweckmäßig ist jedem Einlaß eine die Menge des Strömungsmediums durch Querschnittsveränderung regulierende, in einer Gewindebohrung verdrehbare Drosselschraube zugeordnet.

Die Erfindung wird nachfolgend an zeichnerisch dargestellten Ausführungsbeispielen näher erläutert. Es zeigen:

Figur 1 in einem Teilschnitt zwei einander gegenüberliegende Führungslineale einer Bandkantenbearbeitungsmaschine mit einem dazwischenbefindlichen Metallband,

Figur 2 in einer Seitenansicht eine erste Ausführungsform eines Führungslineals,

Figur 3 das Führungslineal aus Figur 2 in Draufsicht auf die Führungsseite mit den Längsnuten,

Figur 4 das Führungslineal aus Figur 2 in einer vergrößerten, teilweise geschnittenen Draufsicht auf die Führungsseite mit den Längsnuten,

Figur 5 einen Schnitt längs der Linie V-V aus Figur 4,

Figur 6 eine zweite Ausführungsform eines Führungslineals in einer Seitenansicht,

Figur 7 das Führungslineal aus Figur 6 in einer Draufsicht auf die Führungsseite mit den Längsnuten,

Figur 8 einen Schnitt längs der Linie VIII - VIII aus Figur 7 und

Figur 9 einen Schnitt längs der Linie IX - IX aus Figur 7.

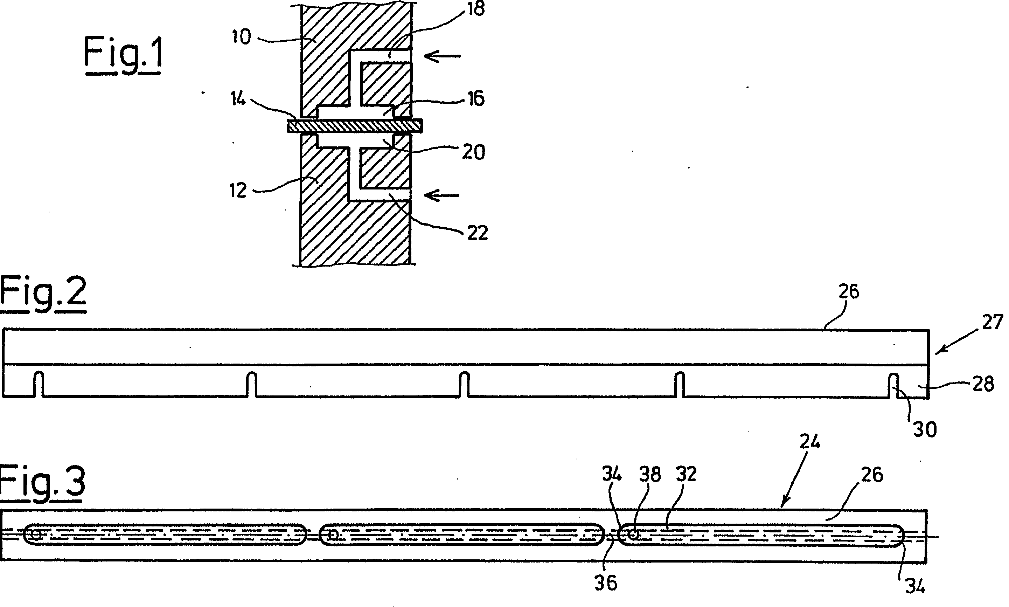

Gemäß Figur 1 befindet sich zwischen den nicht näher bezeichneten, zueinanderweisenden Führungsseiten eines oberen Führungslineals 10 und eines unteren Führungslineals 12 ein Metallband 14. Dieses ist mit geringem Spiel zwischen den Führungsseiten der Führungslineale 10, 12 geführt und wird in einer zur Zeichenebene rechtwinkligen Richtung bewegt. Seitlich von den Führungslinealen 10, 12 bzw. dem Metallband 14 in Längsrichtung hintereinander angeordnete spanabhebende Werkzeuge (nicht dargestellt) sorgen für eine Bearbeitung, d. h. z. B. Beschneiden und Fasen, der Bandkanten. In den Führungsseiten der Führungslineale 10 bzw. 12 befinden sich Längsnuten 16 bzw. 20, die über Strömungsanschlüsse 18 bzw. 22 mit einem in Pfeilrichtung zugeführten Strömungsmedium beaufschlagt werden. Dieses wird unter Druck in die Längsnuten 16, 20 eingepreßt, so daß es ein die Reibung wirksam herabsetzendes Druckpolster bildet. Gleichzeitig strömt über den geringen Bewegungsspalt zwischen den Führungsseiten und dem Metallband Strömungsmedium seitlich ab, so daß die seitlich erzeugten Späne nicht in den Führungsspalt eintreten können. Mit dieser Maßnahme werden äußerst niedrige Reibungskräfte sowie eine gute Führung erreicht, Materialspäne werden sicher vom Führungs- bzw. Bewegungsspalt abgehalten und die Oberflächen des Metallbandes werden geschont.

Bei einer ersten Ausführungsform gemäß den Figuren 2 bis 5 hat ein Führungslineal 24 eine Führungsseite 26 und einen hierzu entgegengesetzt angeordneten Befestigungsfuß 28 mit Befestigungsschlitzen 30. In der Führungsseite 26 befinden sind Längsnuten 32, die endseitig halbkreisförmige Abrundungen 34 aufweisen, ferner etwa mittig in der Führungsseite 26 in Längsrichtung derselben verlaufen und einen gegenseitigen Längsabstand haben. In Bewegungsrichtung des Bandes gesehen befindet sich am Anfang einer jeden Längsnut 32 jeweils ein Einlaß 38 für das Strömungsmedium. Die Einlässe 38 sind jeweils mit einem im Inneren des Führungslineals 24 in dessen Längsrichtung verlaufenden Kanal 36 verbunden. Die Menge des ausströmenden Strömungsmediums ist über eine in eine Gewindebohrung 40 einschraubbare Drosselschraube 41 regulierbar. Das Druckmedium wird stirnseitig von außen dem Kanal 36 über einen Anschluß 37 zugeführt. Am gegenüberliegenden Ende des Lineals 24 ist der Kanal 36 mit einem Blindstopfen 39 verschlossen.

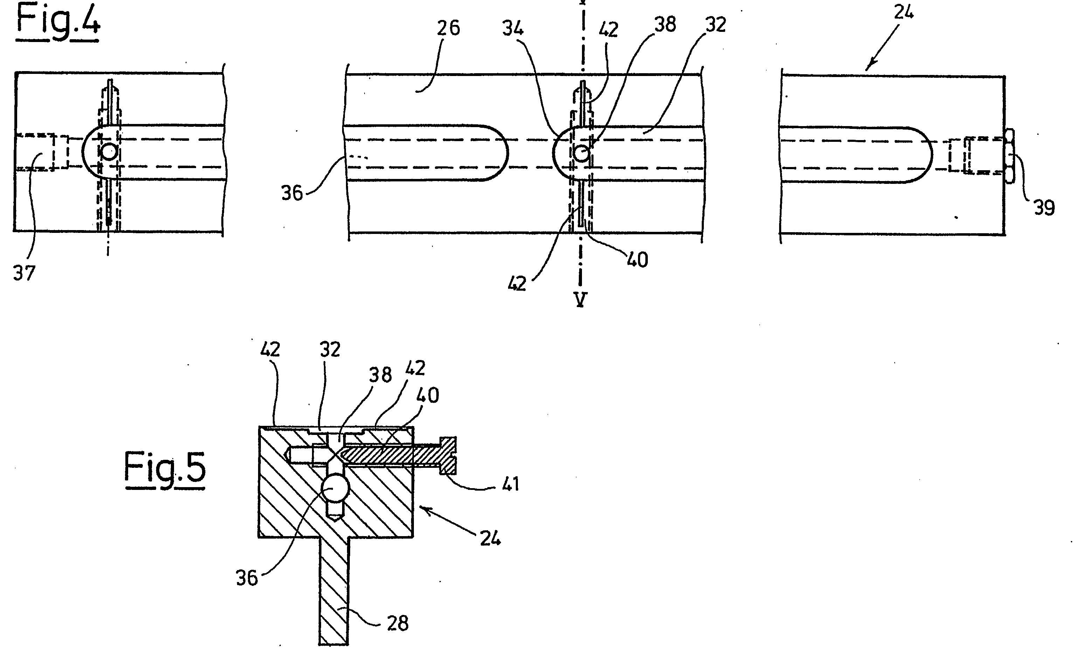

Gemäß den Figuren 4 und 5 kann in die Führungsseite 26 im Bereich der Einlässe 38 jeweils eine weitere Nut 42 eingebettet sein, die quer zur Nut 32 verläuft und wesentlich schmaler und flacher ist. Im vorliegenden Fall erstreckt sich die Nut 42 fast über die volle Breite der Führungsseite 26 und dient zur Ausbringung von Strömungsmittel auch in den Seitenrandbereich des Lineals.

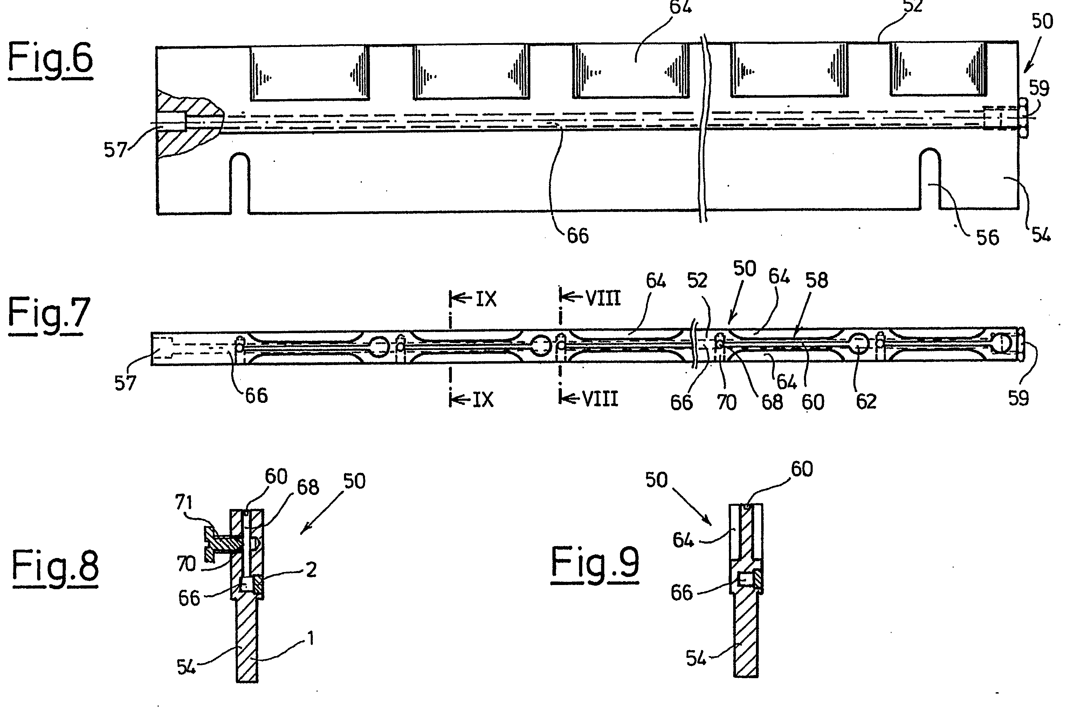

Bei einer zweiten Ausführungsform gemäß den Figuren 6 bis 9 weist ein Führungslineal 50 wiederum eine Führungsseite 52 und einen hierzu entgegengesetzt angeordneten schmaleren Befestigungsfuß 54 mit Befestigungsschlitzen 56 auf. In der Führungsseite 52 befinden sich wiederum in Längsrichtung derselben unter gegenseitigem Abstand verlaufende Längsnuten 58, die jedoch im Unterschied zu der vorherigen Ausführungsform in Längsrichtung eine veränderliche Breite haben.

Gemäß Figur 7 weisen die Längsnuten 58 jeweils einen längeren, schmalen Hauptabschnitt 60 auf, der an einem Ende in einen kreisförmigen Endabschnitt 62 übergeht. im Bereich des schmalen Hauptabschnitts 60 ist die Führungsseite 52 breitenmäßig verjüngt ausgebildet, so daß sich dort seitliche taschenförmige Bereiche 64 ergeben. Diese sind endseitig abgerundet.

An den zu den kreisförmigen Endabschnitten 62 entgegengesetzten Enden der schmalen Hauptabschnitte 60 befindet sich jeweils ein Einlaß 68 für das Strömungsmedium, der wiederum mit einem im Inneren des Führungslineals 50 in dessen Längsrichtung verlaufenden Kanal 66 verbunden ist. Auch bei dieser Linealausführung kann die Menge des vom Zufuhrkanal 66 in die Längsnut 60 strömenden Strömungsmediums über eine den Querschnitt des Einlasses 68 variierende, in einer Gewindebohrung 70 geführte Drosselschraube 71 reguliert werden.

Die beiden Ausführungsformen unterscheiden sich im wesentlichen durch die Form der Längsnuten und der Führungsseiten. Während diese gemäß den Figuren 2 bis 5 über die Länge eine etwa gleichbleibende Breite haben, sind sie gemäß den Figuren 6 bis 8 etwas aufwendiger geformt. Beide Bauformen gewährleisten jedoch äußerst geringe Reibungskräfte und ein wirksames Fernhalten der auftretenden Späne aus dem Bereich zwischen den Führungslinealen und dem Metallband. Während sich die erste Bauform vor allem für dickere Bänder eignet, ist die zweite Bauform insbesondere für dünne Bänder mit Dicken von z. B. einigen Zehntel Millimetern vorgesehen. Während dickere Bänder eine Breite aufweisen, die größer ist als die der Lineale, ist bei dünnen, d. h. weniger stabilen Bändern eine vollflächige Führung erforderlich, die lediglich im Bereich der in den taschenförmigen Aussparungen angeordneten Bearbeitungswerkzeuge unterbrochen ist. Mit der vorliegenden Erfindung wird damit für jedes zu bearbeitende Bandmaterial ein geeignetes Lineal zur Durchführung des eingangs beschriebenen Verfahrens zur Verfügung gestellt.

## Patentansprüche

1. Verfahren zur Kantenbearbeitung von Metallband (14), insbesondere NE-Metallband, mittels einer Bandkantenbearbeitungsmaschine, bei der das longitudinal bewegte Metallband zwischen einem oberen sowie einem unteren Führungslineal (10, 12; 24; 50) geführt ist und seitlich davon in Bewegungsrichtung des Bandes hintereinander Werkzeuge zum Bearbeiten von Bandkanten angeordnet sind, dadurch gekennzeichnet, daß an in Bewegungsrichtung versetzten einzelnen Stellen zwischen das Metallband und die Führungslineale aus deren Mittenbereich heraus ein ins Freie austretendes Strömungsmedium unter Druck eingepreßt wird.

2. Verfahren nach Anspruch 1, dadurch gekennzeichnet, daß als Strömungsmedium im Kreislauf geführte Schneidöl-Emulsion verwendet wird.

3. Führungslineal zum Durchführen des Verfahrens nach einem der vorhergehenden Ansprüche, dadurch gekennzeichnet, daß in der dem Metallband (14) gegenüberliegenden Führungsseite (26, 52) eines jeden Führungslineals (24, 50) in Längsrichtung desselben und unter gegenseitigem Längsabstand etwa mittig verlaufende Längsnuten (32, 58) ausgebildet sind, die mit Einlässen (38, 68) für das ins Freie austretende Strömungsmedium verbunden sind.

4. Führungslineal nach Anspruch 3, dadurch gekennzeichnet, daß die Längsnuten (32, 58) zumindest in Teilbereichen eine Breite haben, die mindestens etwa einem Drittel der hieran angrenzenden Breite der Führungsseite (26, 52) entspricht.

5. Führungslineal nach Anspruch 3 und 4, dadurch gekennzeichnet, daß der gegenseitige Längsabstand der Längsnuten (32, 58) in der Größenordnung der hauptsächlichen Breite der Längsnuten liegt.

6. Führungslineal nach einem der Ansprüche 3 bis 5, dadurch gekennzeichnet, daß die Längsnuten (32) über ihre Länge eine gleichbleibende Breite haben.

7. Führungslineal nach Anspruch 6, dadurch gekennzeichnet, daß die Längsnuten (32) endseitig halbkreisförmig abgerundet sind.

8. Führungslineal nach Anspruch 6 oder 7, dadurch gekennzeichnet, daß die Längsnuten (32) bei einer gleichbleibenden Linealbreite von etwa 57 mm eine Nutbreite von etwa 20 mm, eine Länge von etwa 322 mm, einen Längsabstand von etwa 27 mm und eine Tiefe von etwa 2 mm haben.

9. Führungslineal nach einem der Ansprüche 6 bis 8, dadurch gekennzeichnet, daß in die Führungsseite (26) jeweils im Bereich der Einlässe (38) eine Quernut (42) geringerer Tiefe eingebettet ist.

10. Führungslineal nach Anspruch 9, dadurch gekennzeichnet, daß die Quernut (42) eine die Breite des Führungslineals (50) geringfügig unterschreitende Länge, wie etwa von 52 mm, und eine Tiefe von etwa 0,5 mm hat.

11. Führunglineal nach einem der Ansprüche 3 bis 5, dadurch gekennzeichnet, daß die Längsnuten (58) eine über ihre Länge veränderliche Breite aufweisen.

12. Führungslineal nach Anspruch 11, dadurch gekennzeichnet, daß seine Breite zumindest im Bereich der Führungsseite (52) entsprechend den Längsnuten (58) über die Länge veränderlich ist.

13. Führungslineal nach Anspruch 12, dadurch gekennzeichnet, daß die länglichen schmalen Längsnuten (58) an einem Ende kreisförmig erweitert sind und die Führungsseite (52) jeweils im Bereich der schmalen Nutenbreite breitenmäßig verjüngt ist.

14. Führungslineal nach Anspruch 13, dadurch gekennzeichnet, daß die längsseitigen Enden der verjüngten Bereiche (64) der Führungsseite (52) allmählich, wie abgerundet, in die normale Breite der Führungsseite übergehen.

15. Führungslineal nach einem der Ansprüche 11 bis 14, dadurch gekennzeichnet, daß die Längsnuten (58) in ihrem schmalen Bereich eine Breite von etwa 2 mm bei einer verjüngten Breite der Führungsseite (52) von etwa 5 mm sowie im übrigen eine Breite von bis zu etwa 10 mm bei einer Normalbreite der Führungsseite von etwa 15 mm und eine Tiefe von etwa 2 mm haben.

16. Führungslineal nach einem der Ansprüche 11 bis 15, dadurch gekennzeichnet, daß die Längsnuten (58) bei einer Normalbreite des Führungslineals (50) von etwa 15 mm eine Länge von etwa 70 mm und einen gegenseitigen Längsabstand von etwa 5 mm haben.

17. Führungslineal nach einem der Ansprüche 1 bis 16, dadurch gekennzeichnet, daß die Einlässe (38, 68) in Bandlaufrichtung gesehen jeweils im Anfangsbereich der Längsnuten (32, 58) liegen.

18. Führungslineal nach Anspruch 17, dadurch gekennzeichnet, daß die Einlässe (38, 68) mit einem im Inneren des Lineals (24, 50) in dessen Längsrichtung verlaufenden Kanal (36, 66) verbunden sind.

19. Führungslineal nach Anspruch 18, dadurch gekennzeichnet, daß die Einlässe (38, 68) eine die Menge des Strömungsmediums durch Querschnittsveränderung regulierende, in einer Gewindebohrung (40, 70) verdrehbare Drosselschraube (41, 71) aufweisen.

## Claims

1. Process for the edge machining of a metal strip (14), in particular non-ferrous metal strip, by means of a strip edge processing machine, in which the longitudinally moved metal strip is guided between an upper and a lower guide rule (10, 12, 24, 50) and tools for machining strip edges are arranged in succession on the sides thereof in the direction of movement of the strip, characterised in that a flow medium emerging into the open is forced in under pressure at individual points displaced in the direction of movement between the metal strip and the guide rules from the central region thereof.

2. Process according to claim 1, characterised in that circulated cutting oil emulsion is used as the flow medium.

3. Guide rule for carrying out the process according to one of the preceding claims, characterised in that approximately centrally running longitudinal grooves (32, 58) are formed in the guide side (26, 52) opposite the metal strip (14) of each guide rule (24, 50) in the longitudinal direction thereof and at reciprocal longitudinal intervals, which grooves are connected to inlets (38, 68) for the flow medium emerging into the open.

4. Guide rule according to claim 3, characterised in that the longitudinal grooves (32, 58), at least in partial sections, have a width which corresponds to at least about one third of the width of the guide side (26, 52) adjacent thereto.

5. Guide rule according to claims 3 and 4, characterised in that the reciprocal longitudinal interval between the longitudinal grooves (32, 58) is of the order of the main width of the longitudinal grooves.

6. Guide rule according to one of claims 3 to 5, characterised in that the longitudinal grooves (32) have a constant width across their length.

7. Guide rule according to claim 6, characterised in that the longitudinal grooves (32) are rounded off in a semicircular shape at their ends.

8. Guide rule according to claim 6 or 7, characterised in that the longitudinal grooves (32) at a constant rule width of approximately 57 mm have a groove width of approximately 20 mm, a length of approximately 322 mm, a longitudinal spacing of approximately 27 mm and a depth of approximately 2 mm.

9. Guide rule according to one of claims 6 to 8, characterised in that a transverse groove (42) of low depth is embedded into the guide side (26) in each case in the region of the inlets (38).

10. Guide rule according to claim 9, characterised in that the transverse groove (42) has a length which is slightly less than the width of the guide rule (50), for instance of approximately 52 mm, and a depth of approximately 0.5 mm.

11. Guide rule according to one of claims 3 to 5, characterised in that the longitudinal grooves (58) have a width which varies over their length.

12. Guide rule according to claim 11, characterised in that its width at least in the region of the guide side (52) varies over the length corresponding to the longitudinal grooves (58).

13. Guide rule according to claim 12, characterised in that the elongated narrow longitudinal grooves (58) are widened in a circular shape at one end and the guide side (52) in each case in the region of the narrow groove width tapers in width.

14. Guide rule according to claim 13, characterised in that the ends of the tapered regions (64) of the guide side (52) which are on the longitudinal sides gradually merge into the normal width of the guide side as if rounded.

15. Guide rule according to one of claims 11 to 14, characterised in that the longitudinal grooves (58) in their narrow region have a width of approximately 2 mm at a tapered width of the guide side (52) of approximately 5 mm and otherwise a width of up to about 10 mm at a normal width of the guide side of approximately 15 mm and a depth of approximately 2 mm.

16. Guide rule according to one of claims 11 to 15, characterised in that the longitudinal grooves (58) at a normal width of the guide rule (50) of approximately 15 mm have a length of approximately 70 mm and a reciprocal longitudinal interval of approximately 5 mm.

17. Guide rule according to one of claims 1 to 16, characterised in that the inlets (38, 68), viewed in the direction of travel of the belt, each lie in the starting region of the longitudinal grooves (32, 58).

18. Guide rule according to claim 17, characterised in that the inlets (38, 68) are connected to a duct (36, 66) which runs in the interior of the rule (24, 50) in the longitudinal direction thereof.

19. Guide rule according to claim 18, characterised in that the inlets (38, 68) have a choke screw (41, 71) which can be rotated in a threaded bore (40, 70) and which regulates the rate of the flow medium by altering the cross-section.

**Revendications**

1. Procédé d'usinage des bords d'une bande de métal (14), en particulier d'une bande de métal non ferreux, à l'aide d'une machine d'usinage de bords de bandes dans laquelle la bande de métal déplacée longitudinalement est guidée entre une règle de guidage (10, 12; 24; 50) supérieure et inférieure et dans laquelle des outils d'usinage de bords de bandes sont disposés les uns derrière les autres dans la direction de déplacement de la bande à côté desdites règles, caractérisé en ce qu'en plusieurs endroits décalés dans la direction de déplacement, un fluide d'écoulement sortant à l'air libre est introduit sous pression entre la bande de métal et les règles de guidage à partir de leur zone centrale.

2. Procédé selon la revendication 1, caractérisé en ce qu'une émulsion d'huile de coupe guidée dans un circuit est utilisée comme fluide d'écoulement.

3. Règle de guidage destinée à réaliser le procédé selon l'une des revendications précédentes, caractérisée en ce que le côté de guidage (26, 52) opposé à la bande de métal (14), de chaque règle de guidage (24, 50) comporte des rainures longitudinales (32, 58) qui s'étendent à peu près au centre dans la direction longitudinale dudit côté en étant écartées longitudinalement les unes des autres et sont reliées à des entrées (38, 68) pour le fluide d'écoulement sortant à l'air libre.

4. Règle de guidage selon la revendication 3, caractérisée en ce que les rainures longitudinales (32, 58) possèdent au moins dans des zones partielles une largeur qui correspond au moins à un tiers de la largeur avoisinante du côté de guidage (26, 52).

5. Règle de guidage selon la revendication 3, caractérisée en ce que l'écartement longitudinal entre les rainures longitudinales (32, 58) est de l'ordre de grandeur de la largeur principale des rainures longitudinales.

6. Règle de guidage selon l'une des revendications 3 à 5, caractérisée en ce que les rainures longitudinales (32) possèdent sur leur longueur une largeur constante.

7. Règle de guidage selon la revendication 6, caractérisée en ce que les rainures longitudinales (32) sont arrondies à leurs extrémités en forme de demi-cercle.

8. Règle de guidage selon la revendication 6 ou 7, caractérisée en ce que les rainures longitudinales (32) possèdent, pour une largeur constante de règle d'à peu près 57 mm, une largeur de rainure d'à peu près 20 mm, une longueur d'à peu près 322 mm, un écartement longitudinal d'environ 27 mm et une profondeur d'à peu près 2 mm.

9. Règle de guidage selon l'une des revendications 6 à 8, caractérisée en ce qu'une rainure transversale (42) de profondeur réduite est insérée dans le côté de guidage (26) dans la zone des entrées (38).

10. Règle de guidage selon la revendication 9, caractérisée en ce que la rainure transversale (42) a une longueur, de 52 mm par exemple, légèrement inférieure à la largeur de la règle de guidage (50) et une profondeur d'environ 0,5 mm.

11. Règle de guidage selon l'une des revendications 3 à 5, caractérisée en ce que les rainures longitudinales (58) présentent une largeur variable sur leur longueur.

12. Règle de guidage selon la revendication 11, caractérisée en ce que sa largeur est variable sur la longueur, au moins dans la zone du côté de guidage (52), conformément aux rainures longitudinales (58).

13. Règle de guidage selon la revendication 12, caractérisée en ce que les rainures longitudinales étroites et allongées (58) sont élargies en forme de cercle à une extrémité et en ce que le côté de guidage (52) est réduit en largeur dans la zone de la largeur étroite de rainure.

14. Règle de guidage selon la revendication 13, caractérisée en ce que les extrémités des zones rétrécies (64) du côté de guidage (52) passent progressivement, en étant comme arrondies, à la largeur normale du côté de guidage.

15. Règle de guidage selon l'une des revendications 11 à 14, caractérisée en ce que les rainures longitudinales (58) possèdent dans leur zone étroite une largeur d'à peu près 2 mm pour une largeur réduite du côté de guidage (52) d'à peu près 5 mm ainsi que pour le reste une largeur pouvant atteindre environ 10 mm pour une largeur normale du côté de guidage d'à peu près 15 mm et une profondeur d'à peu près 2 mm.

16. Règle de guidage selon l'une des revendications 11 à 15, caractérisée en ce que les rainures longitudinales (58) possèdent, pour une largeur normale de la règle de guidage (50) d'environ 15 mm, une longueur d'à peu près 70 mm et un écartement longitudinal mutuel d'environ 5 mm.

17. Règle de guidage selon l'une des revendications 1 à 16, caractérisée en ce que les entrées (38, 68) se trouvent, si l'on considère la direction d'avance de la bande, au début des rainures longitudinales (32, 58).

18. Règle de guidage selon la revendication 17, caractérisée en ce que les entrées (38, 68) sont reliées à un canal (36, 66) s'étendant à l'intérieur de la règle (24, 50) dans la direction longitudinale de cette dernière.

19. Règle de guidage selon la revendication 18, caractérisée en ce que les entrées (38, 68) présentent une vis de restriction (41, 71) qui règle la quantité de fluide d'écoulement en modifiant la section transversale et peut être vissée dans un taraudage (40, 70).

Fig.1

Fig.2

Fig.3

# Fig.4

# Fig.5

EP 0 235 321 B1

Fig.6

Fig.7

Fig.8

Fig.9

EP 0 235 321 B1